# EUROPEAN PATENT SPECIFICATION

(11) **EP 1 842 889 B1**
(45) Date of publication and mention of the grant of the patent: **28.12.2011**
(21) Application number: 07006682.4
(22) Date of filing: 30.03.2007
(51) Int. Cl.: C09J 161/06, C09J 125/18, F16J 15/08

(54) **Curing adhesive composition**
Aushärtende Klebstoffzusammensetzung
Composition adhésive durcissante

(30) Priority: 04.04.2006 JP 2006103193
(43) Date of publication of application: 10.10.2007
(73) Proprietor: Carl Freudenberg KG, 69469 Weinheim (DE)
(72) Inventor: Sano, Shinichiro, Fujisawa-shi, Kanagawa 251-0042 (JP); Abe, Katsumi, Fujisawa-shi, Kanagawa 251-0042 (JP); Fukusawa, Kiyofumi, Fujisawa-shi, Kanagawa 251-0042 (JP)

(56) References cited:
- JP-A- 2000 272 045
- JP-A- 2004 202 725

## Description

The present invention relates to a curing adhesive composition. In more details, the present invention relates to a curing adhesive composition that can be effectively used as an adhesive for bonding perfluoroelastomer, for example as an adhesive when producing a layered product comprising a metal layer, an adhesive layer and a perfluoroelastomer layer.

Conventionally, fluororubber has been used as a forming/molding material for various types of sealing parts used under high-temperature environment, however the growing demand for sealing parts that are more durable under the higher temperature environment is more evident due to technical advances in automotive engines etc. Moreover, fluororubber is highly heat resistant and highly oil resistant, however is not resistant to organic solvents such as ether compounds, ketone compounds, thereby the application of fluororubber to the parts for sealing said organic solvents is inhibited, and furthermore, fluororubber cannot be used for the rolls in the cleaning process using solutions such as an alkali solvent, an acid solvent and an organic solvent, nor for copier and printer rolls due to the poor chemical resistance.

In order to overcome such shortcomings of fluororubber, the use of perfluoroelastomer in place of fluororubber has been increased. Although perfluoroelastomer is often used for parts such as O-rings, in which perfluoroelastomer can form the sealing part by itself, it is a reality that perfluoroelastomer is hardly used for parts combined with metal components such as oil seals, rolls and valves due to the fact that the adhesion method thereof has not yet been established. Moreover, no curing (vulcanizing) adhesive suitable for perfluoroelastomer has been commercially available.

To deal with such situations, the applicant of the present invention previously proposed a perfluoroelastomer laminated metal, the interlaminar adhesion properties of which have been improved by laminating an organic peroxide curing fluororubber layer by the use of a curing (vulcanized) adhesive layer having a silane coupling agent as a major component sequentially formed on a metal to be laminated and an organic peroxide curing perfluoroelastomer layer. However, the adhesive layer of this laminated metal comprises 2 layers (a curing (vulcanized) adhesive layer and a curing fluororubber layer), because of which more manufacturing processes are required through which the manufacturing costs are inevitably increased, and therefore making the adhesive layer into a single layer is desired.
Patent Literature 1 Unexamined Patent Publication JP 2000-272045

### Disclosure of the Invention

The purpose of the present invention is to provide a curing (vulcanizable) adhesive composition that can be suitably used for bonding perfluoroelastomer and that is capable of improving the interlaminar adhesion properties of a perfluoroelastomer laminated metal having a single layer of an adhesive layer.

Such purpose of the present invention can be achieved by virtue of a curing (vulcanizable) adhesive composition obtained by compounding 50-400 parts by weight of a silane coupling agent and 50-400 parts by weight of an organometallic compound to 100 parts by weight of a phenolic resin according to claim 1.

An adhesive composition according to the present invention can be effectively used for adhering a metal component and a perfluoroelastomer component. A perfluoroelastomer laminated metal using such an adhesive composition is, unlike conventional methods, capable of laminating a perfluoroelastomer component and a metal component using a single layer without forming multiple adhesive layers, and in addition said perfluoroelastomer laminated metal is capable of providing excellent effects including the ability to obtain conjugated sealing parts with excellent heat resistance and chemical (acid) resistance.

As the phenolic resin used in the present invention, a poly-para vinylphenol resin is used, among the commercially available products of which, the product of Maruzen Petrochemical Co., Ltd., for example MARUKA LYNCUR-M can be used as is. The poly-para vinylphenol resin may be used as a blend with various types of phenolic resins such as a resol-type phenolic resin and a novolac type phenolic resin. In the event that the poly-para vinylphenol resin is used as a blend with other various types of phenolic resins, the percent by weight in the blend should be approximately 50 % by weight or less, preferably approximately 5-30 % by weight.

The silane coupling agent that is added to poly-para vinylphenol in the present invention may include silane coupling agents having a highly active group as an organic functional group such as a vinyl group, a methacryloxy group, an acryloxy group, an amino group highly active functional group, and preferably silane coupling agents having a (metha) acryloxy group as an organic functional group, for example γ-(metha) acryloxypropyltrimethoxysilane.

These silane coupling agents are used at the mixing ratio of approximately 50-400 parts by weight, preferably approximately 150-300 parts by weight to 100 parts by weight of poly-para vinylphenol. In the event that the mixing ratio of the silane coupling agent is less than that in the above, the sufficient conjugation with perfluoroelastomer cannot be achieved, while the mixing ratio is greater than that in the above, the adhesive layer can become brittle, causing peeling, which is undesirable.

The organometallic compounds added to poly-para vinylphenol in the present invention include: organic aluminium compounds such as triisopropoxy aluminium, mono-sec-butoxy-dipropoxy aluminium, tri-sec-butoxy aluminium, ethyl aceto-acetate-aluminium-diisopropylate, aluminium tris(ethyl aceto-acetate), aluminium monoacetylacetonate bis-ethyl aceto-acetate, aluminium tris(acetyl acetate); organic titanium compounds such as titanium acetylacetonate, tetra(isopropoxy)titanium, tetra-n-butoxy titanium, diisopropoxy titanium bis(ethyl aceto-acetate), 1,3-propane-dioxy titanium bis(ethyl aceto-acetate), diisopropoxy titanium bis(acetylacetonate), titanium tetra-acetylacetonate; organic zirconium compounds such as tetra-n-propyl zirconium, tetra-n-butoxy zirconium, din-butoxy zirconium bis(acetylacetonate), din-butoxy zirconium bis(ethyl aceto-acetate), and organic tin compounds such as dibutyl tin dilaurate, dibutyl tin dioctate and dioctyl tin dilaurate.

Due to the limitation of solvent types in which organometallic compounds can be soluable, lower alkyl groups such as an organic aluminium compound comprised of 1 or more chelate ring(s) or alkoxy group(s), preferably with relatively high degree of freedom in solvent selection as shown in the undermentioned structural formula: 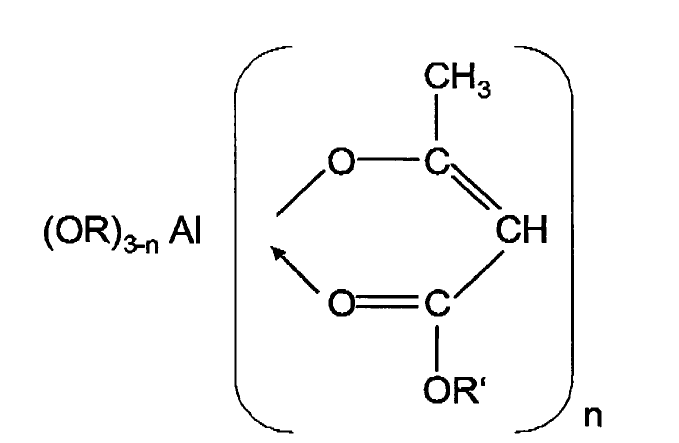 R, R': CH₃, C₂H₅, n-C₃H₇, i-C₃H₇, n-C₄H₉, i-C₄H₉
N: Whole number (integer) 0-3
Or, titanium acetylacetonato as shown in the undermentioned structural formula:

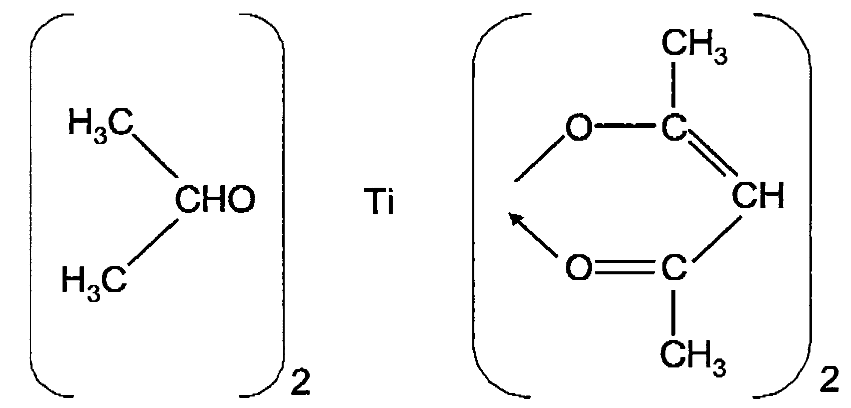

Alternatively, titanium acid-dilactate as shown in the undermentioned structural formula is used.

(OH)₂Ti(OCH(CH₃)COOH)₂

These organometallic compounds are used at the mixing ratio of approximately 50-400 parts by weight, preferably approximately 100-300 parts by weight to 100 parts by weight of poly-para vinylphenol. In the event that the mixing ratio of the organometallic compound is less than that in the above, the sufficient conjugation with the base plate cannot be achieved, while the mixing ratio is greater than that in the above, the adhesive layer can become brittle, causing peeling, which is undesirable.

While the curing (vulcanizable) adhesive compositions comprising each of the above components as essential components may be used for bonding various types of fluororubber, perfluoroelastomer, and the like, said curing adhesive compositions may be used effectively and particularly for bonding perfluoroelastomer, for example in the production of perfluoroelastomer laminated metals in which a metal layer and a perfluoroelastomer layer are laminated. As the perfluoroelastomer used in the present invention, homopolymers or copolymers such as perfluoro(methyl-vinyl ether), perfluoro(ethyl vinyl ether), perfluoro(propyl vinyl ether), tetra-fluoro ethylene, hexafluoropropene, preferably tetra-fluoro ethylene-perfluoro(methyl-vinyl ether) copolymer, and the like may be used, and for example, commercially available products such as the product of DAIKIN INDUSTRIES, ltd.: DAI-EL perfluoro, the product of DuPont Dow Elastomers; Kalrez, and the like may also be used by adding various types of compounding ingredients including organic peroxides as a vulcanizing (curing) agent.

The curing (vulcanizable) adhesive compositions comprising the above-described essential components may be used as solutions diluted with organic solvents in such a manner that the total concentration of each of these components is approximately 3-10 % by weight. The organic solvents used in the present invention may include any solvents that can be stably dissolved into poly-para vinylphenol, as well as a silane coupling agent and an organometallic compound, however alcohol compounds such as methanol, isopropanol; ketone compounds such as methyl-ethyl-keton, methyl-isobutyl keton; ester compounds such as acetic acid ethyl, acetic acid propyl, and ether compounds such as ethyl cellosolve, 2-ethoxyethanol and 2-butoxyethanol may be generally used.

The adhesive composition solution is, for example in the process of producing a perfluoroelastomer laminated metal, applied onto a metal surface in such a manner that the coating thickness would be, for example in the each of the undermentioned examples, to the extent of approximately 0.5-3 µm using any application methods such as a spray method, a dipping method, a brush method or a roll coater method, whereof, after the coated metal is dried at room temperature or under hot air, the resulting coated metal was bake-treated at approximately 100-250°C for approximately 0.5-3 hours to form the adhesive layer. The metals used in the present invention may include mild steel, stainless steel, aluminium and aluminium diecast, the shapes of which may be in the form of plates or bars depending upon the types of products.

The perfluoroelastomer layer can then be formed on the adhesive layer formed in the manner described above by conjugating an unvulcanized perfluoroelastomer composition and by pressure-vulcanizing the unvulcanized perfluoroelastomer composition at approximately 180-200°C for approximately 2-30 minutes. The perfluoroelastomer layer is, for example, in each of the undermentioned examples, formed to the thickness of approximately 1.5-2 mm.

Hereinafter, the present invention will be described in details with reference to examples.

### Example 1

The curing adhesive with the following composition was applied onto a zinc phosphate-treated steel plate (SPCC), dried at room temperature for 20 minutes, and then bake-treated at 200°C for 30 minutes to form a curing adhesive layer.

| | |
|---|---|
| Poly-para vinylphenol (MARUKA LYNCUR M) | 11 parts by weight |
| Acryloxypropyltrimethoxysilane | 21 parts by weight |
| Titanium acid-dilactate aqueous solution | 41 parts by weight |
| (component concentration 40 % by weight) | |
| Ethyl cellosolve | 927 parts by weight |

The unvulcanized perfluoroelastomer composition with the undermentioned formulation was conjugated on the curing adhesive layer, and then pressure-vulcanized at 180°C for 6 minutes, forming a perfluoroelastomer layer to produce a perfluoroelastomer laminated metal plate.

| | |
|---|---|
| Perfluoroelastomer (DAI-EL perfluoro) | 100 parts by weight |
| MT Carbon Black | 20 parts by weight |
| Calcium hydroxide | 5 parts by weight |
| Triallyl isocyanurate | 3 parts by weight |
| (Hitachi Chemical Co., Ltd. product: TAIC) | |
| Organic peroxide | 2 parts by weight |
| (NOF Corporation product: PERHEXA 25B-40) | |

### Example 2

Same as in Example 1, except that titanium acetylacetonate in place of titanium acid-dilactate and methyl-alcohol in place of ethyl cellosolve were used in the same amount respectively.

### Example 3

Same as in Example 1, except that methacryloxypropyltrimethoxysilane in place of acryloxypropyltrimethoxysilane was used in the same amount.

### Comparative Example 1

A curing adhesive comprising the undermentioned compounds was applied onto a zinc phosphate-treated steel plate (SPCC), air-dried for 30 minutes under room temperature, and then bake-treated at 150°C for 5 minutes.

| | |
|---|---|
| γ-methacryloxypropyltrimethoxysilane | 27 parts by weight |
| γ-aminopropy) trimethoxysilane | 3 parts by weight |
| Titanium tetra-acetylacetonate | 6 parts by weight |
| Distilled water | 6 parts by weight |
| Ethanol | 258 parts by weight |
| Methyl-ethyl-keton | 700 parts by weight |

Thereon, an unvulcanized fluororubber composition comprising the undermentioned compounds was conjugated:

| | |
|---|---|
| Fluororubber (SHOWA DENKO K.K./DuPont product: Viton GLT305) | 100 parts by weight |
| SRF Carbon Black | 25 parts by weight |
| Sodium stearate | 1 part by weight |
| Triallyl isocyanurate (TAIC) | 3 parts by weight |
| Organic peroxide (PERHEXA25B-40) | 3 parts by weight |

And thereon, an unvulcanized perfluoroelastomer composition comprising the undermentioned compounds was further conjugated, and then pressure-vulcanized at 180°C for 6 minutes.

| | |
|---|---|
| Perfluoroelastomer (DAI-EL perfluoro) | 100 parts by weight |
| MT Carbon Black | 20 parts by weight |
| Calcium hydroxide | 5 parts by weight |
| Triallyl isocyanurate (TAIC) | 3 parts by weight |
| Organic peroxide (PERHEXA25B-40) | 2 parts by weight |

### Comparative Example 2

Same as in Example 2, except that resol-type phenolic in place of poly-para vinylphenol was used in the same amount.

The perfluoroelastomer laminated metal plates obtained in each of the above Examples and Comparative Examples were subjected to the 90-degree Peel Test in accordance with JIS-K 6256 to measure the adhesion strength and remaining rubber area ratio. The results obtained from the test are shown in the following table.

**TABLE**

| | Example | | | Comparative Example | |
|---|---|---|---|---|---|
| Measurement Item | 1 | 2 | 3 | 1 | 2 |
| Peel-Strength (N/mm) | 3.3 | 3.5 | 3.2 | 3.5 | 1.5 |
| Remaining Rubber Area Ratio (%) | 95 | 100 | 90 | 100 | 30 |

A curing adhesive composition according to the present invention can be effectively used for the bonding between metal and perfluoroelastomer, thereby the perfluoroelastomer laminated metal laminated by using the curing adhesive composition can be effectively used as perfluoroelastomer laminated metal parts such as the parts for valves, copiers, printer rolls and oil seals.

## Claims

1. A curing adhesive composition obtained by compounding 50-400 parts by weight of a silane coupling agent and 50-400 parts by weight of an organometallic compound to 100 parts by weight of a phenolic resin, wherein the phenolic resin comprises poly-para vinylphenol and wherein the organometallic compound is an organic aluminium compound comprising one or more chelate ring(s) or alkoxy groups(s), or an organic titanium compound , or an organic zirconium compound , or an organic tin compound.

2. A curing adhesive composition according to claim 1, wherein the organic aluminium compound is triisopropoxy aluminium, mono-sec-butoxy-dipropoxy aluminium, tri-sec-butoxy aluminium, ethyl aceto-acetate-aluminium-diisopropylate, aluminium tris(ethyl aceto-acetate), aluminium monoacetylacetonate bis-ethyl aceto-acetate or aluminium tris(acetyl acetate).

3. Use of a curing adhesive composition according to claim 1 or 2 as an adhesive when manufacturing a layered product comprising a metal layer, an adhesive layer and a perfluoroelastomer layer.

4. A perfluoroelastomer laminated metal comprising a perfluoroelastomer layer and a metal layer laminated by a curing adhesive composition according to claim 1 or 2.

5. A perfluomelastomer laminated metal produced by laminating a metal layer and a perfluoroelastomer layer using a curing adhesive composition according to claim 1 or 2 as an adhesive.

## Patentansprüche

1. Härtende Klebstoffzusammensetzung, erhalten durch Compoundieren von 50-400 Gewichtsteilen eines Silan-Haftvermittlers und 50-400 Gewichtsteilen einer metallorganischen Verbindung mit 100 Gewichtsteilen eines Phenolharzes, wobei das Phenolharz Poly-para-vinylphenol umfasst und es sich bei der metallorganischen Verbindung um eine organische Aluminiumverbindung mit einem oder mehreren Chelatringen oder einer oder mehreren Alkoxygruppen oder eine organische Titanverbindung oder eine organische Zirconiumverbindung oder eine organische Zinnverbindung handelt.

2. Härtende Klebstoffzusammensetzung nach Anspruch 1, wobei es sich bei der organischen Aluminiumverbindung um Triisopropoxyaluminium, Mono-sec.-butoxy-dipropoxyaluminium, Tri-sec.-butoxyaluminium, Ethylacetoacetataluminiumdiisopropylat, Aluminiumtris(ethylacetoacetat), Aluminiummonoacetylacetonatbisethylacetoacetat oder Aluminiumtris-(acetylacetat) handelt.

3. Verwendung einer härtenden Klebstoffzusammensetzung nach Anspruch 1 oder 2, als Klebstoff bei der Herstellung eines schichtförmigen Produkts mit einer Metallschicht, einer Klebstoffschicht und einer Perfluorelastomerschicht.

4. Perfluorelastomerlaminiertes Metall, umfassend eine Perfluorelastomerschicht und eine Metallschicht, die durch eine härtende Klebstoffzusammensetzung nach Anspruch 1 oder 2 laminiert sind.

5. Perfluorelastomerlaminiertes Metall, hergestellt durch Laminieren einer Metallschicht und einer Perfluorelastomerschicht unter Verwendung einer härtenden Klebstoffzusammensetzung nach Anspruch 1 oder 2 als Klebstoff.

## Revendications

1. Composition adhésive durcissable obtenue par compoundage de 50-400 parties pondérales d'un agent de pontage de la classe des silanes et de 50-400 parties pondérales d'un composé organométallique pour 100 parties pondérales d'une résine phénolique, la résine phénolique comprenant du poly-paravinylphénol et le composé organométallique étant un composé d'aluminium organique comprenant un ou plusieurs cycles chélate ou groupes alcoxy, ou un composé de titane organique, ou un composé de zirconium organique, ou un composé d'étain organique.

2. Composition adhésive durcissable selon la revendication 1, dans laquelle le composé d'aluminium organique est le triisopropoxyaluminium, le mono-sec-butoxy-dipropoxyaluminium, le tri-sec-butoxyaluminium, l'acétoacétate d'éthyle diisopropylate d'aluminium, l'aluminium tris(acétoacétate d'éthyle), le monoacétylacétonate d'aluminium bis(acétoacétate d'éthyle) ou le tris(acétylacétate) d'aluminium.

3. Utilisation d'une composition adhésive durcissable selon la revendication 1 ou 2 comme adhésif durant la fabrication d'un produit stratifié comprenant une couche de métal, une couche adhésive et une couche de perfluoroélastomère.

4. Stratifié de perfluoroélastomère et de métal comprenant une couche de perfluoroélastomère et une couche de métal stratifiées en utilisant une composition adhésive durcissable selon la revendication 1 ou 2.

5. Stratifié de perfluoroélastomère et de métal produit par stratification d'une couche de métal et d'une couche de perfluoroélastomère en utilisant une composition adhésive durcissable selon la revendication 1 ou 2 comme adhésif.
